# FASCICULE DE BREVET EUROPEEN

(11) **EP 3 728 974 B1**
(45) Date de publication et mention de la délivrance du brevet: **24.04.2024**
(21) Numéro de dépôt: 18839606.3
(22) Date de dépôt: 12.12.2018
(51) Int. Cl.: F27B 3/14, C03B 5/235, C03B 5/425, C03B 5/44, F27B 3/16, F27D 1/16, C03B 5/42

(54) **FOUR A BRULEUR IMMERGE A PAROI AUTO-CREUSET**
OFEN MIT EINGETAUCHTEM BRENNER MIT SELBSTTIEGELWAND
SUBMERGED-BURNER FURNACE WITH SELF-CRUCIBLE WALL

(30) Priorité: 21.12.2017 FR 1762854; 30.07.2018 FR 1857089
(43) Date de publication de la demande: 28.10.2020
(73) Titulaire: SAINT-GOBAIN ISOVER, 92400 Courbevoie (FR)
(72) Inventeur: GUILLET, Antoine, 75019 PARIS (FR); LOPEPE, Frédéric, 93110 ROSNY SOUS BOIS (FR); DI CARO, Richard, 75011 PARIS (FR)
(74) Mandataire: Saint-Gobain Recherche
(86) Numéro de dépôt international: PCT/FR2018/053238
(87) Numéro de publication internationale: WO 2019/122614

(56) Documents cités:
- WO-A1-2013/186480
- FR-A1- 2 428 220
- US-A1- 2013 327 092
- US-A1- 2014 007 622

## Description

L'invention concerne le domaine des fours à brûleurs immergés à paroi métallique refroidies par un fluide de refroidissement, une telle paroi étant habituellement appelée « water-jacket » par l'homme du métier. Ces fours sont destinés à la fusion d'une matière vitrifiable, généralement du type oxyde, comprenant généralement au moins 30% en masse de silice, telle qu'un verre ou un silicate comme un silicate d'alcalin et/ou d'alcalino-terreux. Le verre peut notamment être silicosodocalcique ou être de la roche souvent appelée « verre noir » par l'homme du métier.

Tel que décrit dans les documents US2013/327092A1 et US2014/007622A1, on utilise un système de refroidissement par water-jacket pour un four à brûleur immergé afin de contenir la température à laquelle sa structure est exposée. La matière vitrifiable en fusion, pouvant notamment être du verre en fusion, au contact de ces parois refroidies (T°C < 100°C) dévitrifie (c'est-à-dire se solidifie) et forme une croûte solide entre la masse de matières vitrifiables et la paroi métallique. Cette croûte de matière vitrifiable dévitrifiée procure une protection naturelle des parois. Elle est parfaitement compatible avec la matière vitrifiable en cours de fusion puisqu'il s'agit de la même composition solidifiée. Cette croûte forme donc un « auto-creuset » pour la matière vitrifiable dans le four. On a cependant constaté que cet auto-creuset se fissure, se fragmente et tombe par plaques en cours de fonctionnement. Même si la zone d'auto-creuset éliminée se reconstitue au contact de la matière vitrifiable, la surface métallique de paroi correspondante a malgré tout été exposée un certain temps à l'érosion/corrosion par la matière vitrifiable fondue très chaude, et par ailleurs, un échange thermique très important entre la matière vitrifiable fondue, notamment le verre fondu, et la paroi refroidie a lieu localement tant que l'auto-creuset ne s'est pas reconstitué. De plus, les plaques solides d'auto-creuset tombées dans la matière fondue sont refondues, ce qui absorbe également inutilement de l'énergie et fait baisser la température de la masse en fusion. Tous ces transferts thermiques imprévisibles déstabilisent le procédé de fusion.

On a estimé que la mauvaise tenue de l'auto-creuset sur la paroi tient à la nature chimique et physique de cette paroi, notamment au fait qu'elle soit trop lisse, ainsi qu'aux contraintes thermiques importantes qu'il subit. De plus, on s'est rendu compte que l'auto-creuset avait une structure mal formée à son interface avec la paroi métallique en raison de la rapide solidification de la matière vitrifiable. La face de l'auto-creuset en contact avec le métal épouse très imparfaitement celui-ci, est poreux et contient de véritables canalisations. La matière en fusion est en permanence puissamment projetée contre les parois en raison des importants remous provoqué par la combustion immergée. Ces projections exercent une forte pression sur les gaz de combustion et l'on a constaté que du gaz de combustion passe entre l'auto-creuset et la paroi métallique pour ressortir de l'auto-creuset du côté de la matière vitrifiable à une certaine hauteur du fond de la cuve, cette hauteur étant aléatoire et pouvant même aller jusqu'au niveau de la voûte. L'expression « gaz de combustion » recouvre ici les gaz formés suite à une combustion et/ou du combustible non-brulé et/ou du comburant. L'analyse de ces gaz de combustion a montré qu'ils contiennent beaucoup d'eau, laquelle est particulièrement corrosive pour le métal de la paroi. De plus, les gaz imbrûlés sortant de l'auto-creuset à une certaine hauteur, brûlent dès leur sortie de l'auto-creuset mais transfèrent moins d'énergie à la matière vitrifiable en cours de fusion que s'ils avaient brûlé au fond de la cuve comme cela est normalement prévu.

L'invention, telle que définie dans les revendications annexes, concerne un four de fusion d'une matière vitrifiable, notamment du verre, à brûleur immergé comprenant une paroi refroidie par un fluide de refroidissement, la face de la paroi tournée vers l'intérieur du four comprenant, avant fusion de la matière vitrifiable dans le four, une texture d'accroche pour de la matière vitrifiable dévitrifiée, dite « auto-creuset », allant recouvrir la paroi intérieure du four dès le début de son fonctionnement en fusion de matière vitrifiable. La paroi comprend une tôle métallique, le cas échéant verticale si la paroi est verticale, la texture d'accroche étant réalisée par un système d'accroche comprenant des éléments métalliques en saillie fixés sur la face de ladite tôle tournée vers l'intérieur du four.

L'invention procure notamment les avantages suivant :
- stabilisation de la couche d'auto-creuset du four ;
- stabilisation du procédé de fusion ;
- stabilisation et minimisation des transferts thermiques et donc amélioration du rendement énergétique;
- déviation des gaz imbrulés vers le bain de matière vitrifiable et minimisation des gaz imbrulés passant entre la paroi en métal et l'auto-creuset ;
- réduction de la corrosion de la paroi métallique et allongement de sa durée de vie.

La solution présentée dans la présente demande est par ailleurs peu onéreuse, flexible, et facile à mettre en place.

La paroi est généralement verticale mais peut aussi être inclinée. Globalement, la paroi fait le lien entre la sole et la voûte du four. La paroi permet au four, avec la sole, de contenir la matière vitrifiable fondue dans le four.

La texture d'accroche comprend des pleins et des vides de préférence d'au moins 5 mm considérés perpendiculairement à la paroi. Ceci signifie que si l'on place une surface lisse parallèle à la paroi contre la surface texturée, ladite surface lisse étant constituée de génératrices parallèles entre elles (ces génératrices sont verticales si la paroi est verticale), l'espace entre la paroi et ladite surface lisse contient des creux d'au moins 5 mm et de préférence d'au moins 1 cm et de préférence d'au moins 2 cm. On peut même placer une sphère virtuelle d'au moins 5 mm de diamètre et de préférence d'au moins 1 cm de diamètre et de préférence d'au moins 2 cm de diamètre dans ces creux. La texture d'accroche est visible à l'œil nu. On considère qu'une tôle métallique lisse et plane n'a pas de texture d'accroche.

Au départ, la tôle métallique est généralement lisse et dépourvue de tout relief particulier, et c'est le système d'accroche selon l'invention fixé sur cette tôle qui créé la texture. L'autre face de la tôle métallique (tournée vers l'extérieur du four) est refroidie, notamment est en contact avec le fluide de refroidissement, lequel est généralement de l'eau froide, c'est-à-dire de l'eau à une température comprise généralement dans le domaine allant de 1 à 20°C (température à l'entrée de la canalisation de refroidissement).

Les matières vitrifiables en cours de fusion dans le four sont généralement à une température comprise entre 800°C et 1590°C.

Les éléments texturant la paroi peuvent notamment comprendre du profilé métallique comme du rond plein, de la cornière, du carré métallique (tubulaire ou plein), etc. De préférence, le profilé métallique est fixé à la tôle métallique de sorte que sa direction d'extension principale (direction de sa direction principale perpendiculaire à sa section) soit sensiblement horizontale. Notamment, dans le cas d'une cornière, celle-ci est avantageusement fixée via son arête extérieure. Cette arête extérieure forme un angle obtus à la rencontre des deux plats métalliques de la cornière. La cornière est avantageusement fixée de sorte que cette arête soit sensiblement horizontale. La fixation d'un profilé métallique peut généralement être réalisée par soudage sur la tôle métallique.

Les éléments texturant la paroi peuvent également être des éléments ponctuels (notamment sans extension plus forte dans une direction particulière parallèlement à la paroi) fixés à la paroi, comme des picots insérés dans la tôle ou soudés sur la tôle.

Avantageusement, la texture comprend des éléments en saillie formant localement dans la paroi des espaces pouvant se remplir par de la matière vitrifiable dévitrifiée de l'auto-creuset, cette matière vitrifiable dévitrifiée étant emprisonnée dans ces espaces entre au moins une partie d'élément en saillie et de la surface de paroi situé plus en périphérie du four (c'est-à-dire plus loin vers l'extérieur du four) que la partie d'élément en saillie.

De préférence, les éléments texturant sont fixés en saillie sur la tôle de la paroi métallique en dépassant de la tôle métallique d'une profondeur d'au moins 1 cm et de préférence au moins 2 cm à partir de la tôle.

Les éléments texturant agissent par ailleurs efficacement pour empêcher les gaz de cheminer le long de la paroi métallique et sous l'auto-creuset pour remonter à une certaine distance du fond du four. Pour ce faire, on place avantageusement un élément texturant, notamment du type profilé, vers le bas du four et faisant le tour du four sensiblement à l'horizontal. Il s'agit avantageusement d'un profilé dont la direction d'extension est sensiblement horizontale (un élément ponctuel en surface de la paroi, du type picot n'est pas préféré pour cette fonction de barrière). Cette ceinture d'élément texturant forme en effet une barrière de déviation des gaz de combustion, de sorte qu'il y a beaucoup moins de gaz de combustion cheminant sous l'auto-creuset au-dessus de cette barrière. Ces éléments texturant, formant le cas échéant une ceinture complète sur le pourtour intérieur de la paroi métallique est de préférence à une distance du point le plus bas de la sole comprise entre 5 cm et 20 cm. La mise en place de cette barrière de déviation force donc les gaz à repasser dans le bain en fusion, ce qui a deux conséquences: 1) les gaz imbrulés vont bien brûler dans la matière vitrifiable, 2) l'eau ne longe plus la paroi métallique dont la corrosion s'en voit réduite. Ainsi, la texture selon l'invention peut comprendre une ceinture sensiblement horizontale en saillie à une distance du point le plus bas de la sole (hors auto-creuset sur la sole), comprise entre 5 cm et 20 cm. Ce point le plus bas de la sole est celui en contact avec des matières vitrifiables avant la formation de l'auto-creuset. On note en effet que de l'auto-creuset peut également se former sur la sole.

Afin de réduire encore la corrosion du métal dans la paroi par la matière vitrifiable en fusion, notamment le verre en fusion, on peut recouvrir la paroi, dont ses éléments texturants, d'un béton réfractaire, de préférence un béton comprenant de l'alumine. Le béton recouvre la paroi pour former une interface avec l'auto-creuset. Le béton procure une accroche chimique à l'auto-creuset. En effet, l'alumine migre dans la matière vitrifiable de l'auto-creuset, pouvant notamment être en verre, ce qui conduit à l'augmentation de la température de dévitrification de cette matière vitrifiable, et en conséquence à une accroche chimique très forte de l'auto-creuset. Notamment, le béton contient plus de 50% et de préférence plus de 80% d'alumine. Des bétons adaptés sont commercialisés sous les références 6P ou F15R par Thermbond, T96HT ou T95G3 par Calderys, Erplast 20 ou Ersol 50 cast par Sefpro. Le béton peut être appliqué avec une épaisseur sensiblement uniforme, y compris sur les éléments texturants, de sorte que la surface orientée vers l'intérieur du four conserve une texture en conséquence de la présence d'éléments texturant appliqués au préalable à la paroi métallique. La présence de ces éléments texturants contribue à la tenue sur la paroi du béton. On préfère que la surface du béton tournée vers l'intérieure du four conserve une texture en conséquence de la présence des éléments texturant appliqués au préalable à la paroi métallique. Généralement, on ne met pas suffisamment de béton pour lisser la surface du béton tournée vers l'intérieur du four. En effet, on préfère garder de la texture à la surface du béton devant former une interface avec l'auto-creuset. La couche de béton peut avoir une épaisseur comprise dans le domaine allant de 5 à 70 mm.

On peut fabriquer une paroi de four selon l'invention, dont une face est tournée vers l'intérieur du four et l'autre face est refroidie, notamment en étant en contact avec un fluide de refroidissement, en fixant, notamment par soudure, des éléments texturants, notamment métalliques, sur une face lisse d'une tôle métallique, ladite face alors munie desdits éléments texturants étant destinée à être tournée vers l'intérieur du four et être recouverte de l'auto-creuset au début du fonctionnement du four. L'invention concerne également un procédé de fabrication du four selon l'invention comprenant la fixation d'éléments texturant sur la face lisse d'une tôle métallique, puis le positionnement de la tôle, le cas échéantà la verticale, de façon à ce que la face munie des éléments texturants forme la face intérieure d'une paroi du four.

L'invention concerne également un procédé de fabrication d'une matière vitrifiable fondue, notamment de verre fondu, comprenant la fusion de la matière vitrifiable dans le four selon l'invention. Des matières premières sont introduites dans le four puis sont fondues dans le four pour produire la matière vitrifiable fondue, cette dernière étant ensuite extraite du four par écoulement par un orifice.

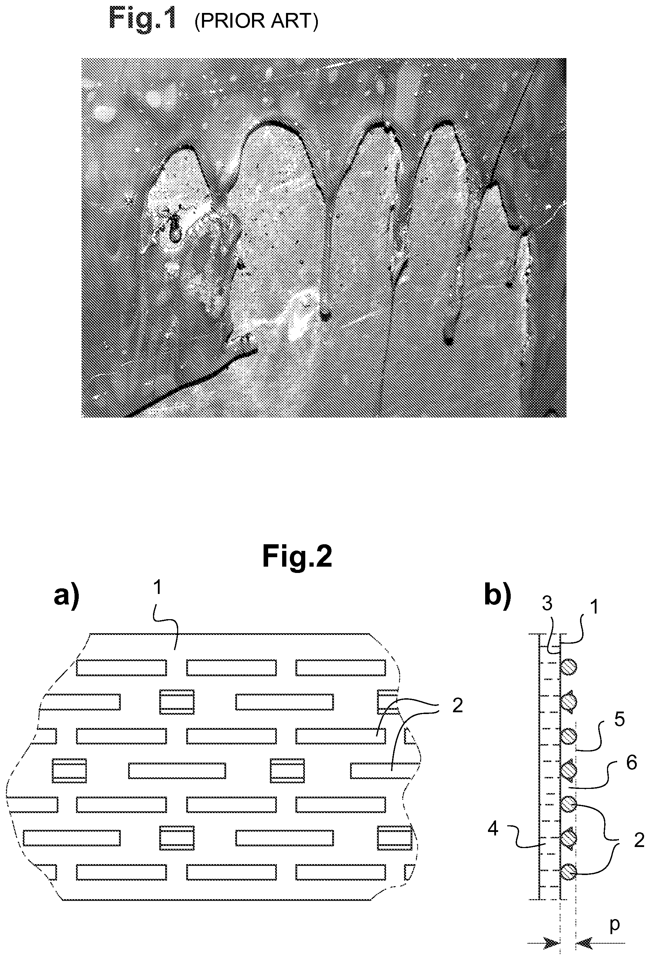

La figure 1 représente l'intérieur d'un four à brûleur immergé à parois métalliques du type « water jacket » selon l'art antérieur après arrêt. Les parois métalliques étaient lisses avant la mise en fonctionnement du four, c'est-à-dire étaient constituées par de la tôle en acier sans texture particulière. On voit qu'une couche de verre dévitrifié collant à la paroi s'est détachée par plaques de façon aléatoire pour tomber sur la sole.

La figure 2 représente la paroi d'un four selon l'invention, vue sur la face intérieure en a) et en coupe en b). La tôle métallique 1 verticale et lisse de départ de la paroi est recouverte d'éléments métallique 2 fixés sur ladite tôle. Ces éléments métalliques sont du type profilé et sont fixés par soudage sur la tôle. Ils sont fixés de sorte que leur principale direction d'extension est sensiblement horizontale. Ils forment une texture d'accroche comprenant des pleins et des vides de valeur p (au moins 5 mm) perpendiculairement à la surface à partir de la tôle métallique 1. En effet, si l'on place une surface lisse 5 parallèle à la paroi contre la surface texturée, ladite surface lisse étant constituée de génératrices verticales parallèles entre elles, l'espace entre la paroi et ladite surface lisse contient des creux 6 d'au moins 5 mm perpendiculairement à la paroi (la profondeur p est considérée perpendiculairement à la paroi). L'autre face 3 de la tôle métallique 1 est en contact avec de l'eau de refroidissement 4.

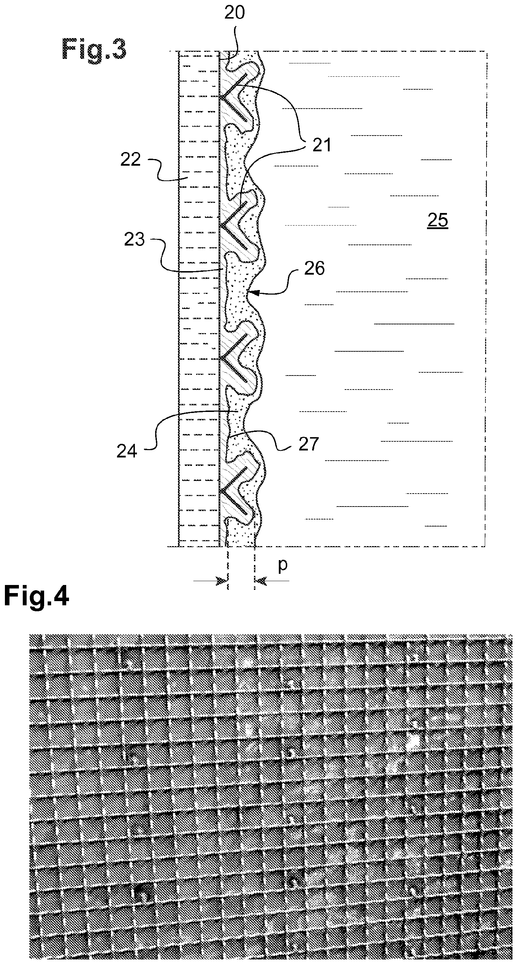

La figure 3 représente la paroi d'un four selon l'invention, vue en coupe. La tôle métallique lisse 20 verticale de départ de la paroi est recouverte d'éléments métallique 21 fixés sur ladite tôle. Ces éléments métalliques sont du type profilé de forme cornière et sont fixés par soudage sur la tôle par leur arête extérieure joignant les deux plats de cornière. Ils sont fixés de sorte que leur principale direction d'extension soit sensiblement horizontale. L'autre face de la tôle métallique 20 est en contact avec de l'eau de refroidissement 22. Un béton réfractaire 23 a été appliqué sur la paroi métallique après fixation de la cornière 21. Ce béton recouvre donc les cornières 21 et la face intérieure de la tôle 20. Avant fonctionnement du four, la surface 27 de la paroi intérieure du four présente ainsi des creux et des pleins de profondeur p mesuré perpendiculairement à la paroi. L'auto-creuset de matière vitrifiable dévitrifiée 24 vient coller au béton et forme une nouvelle surface de contact 26 pour les matières 25 en cours de fusion. La profondeur des pleins et creux de la surface 26 de l'auto-creuset est généralement inférieure à celle de la surface 27 de la paroi (ici en béton) avant fusion de matière vitrifiable.

La figure 4 représente la paroi intérieure d'un four à brûleur immergé avant toute fusion de matière vitrifiable dans le four. Une grille métallique formant texture d'accroche pour l'auto-creuset a été soudée à la tôle métallique derrière laquelle circule de l'eau de refroidissement.

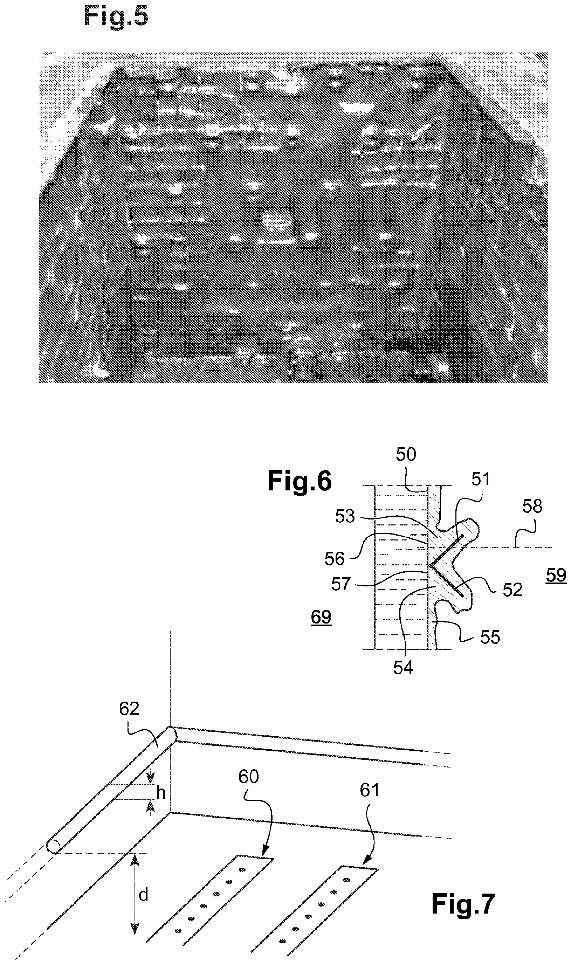

La figure 5 représente la paroi intérieure du four à brûleur immergé de la figure 4 après fusion de verre dans le four, et vidange du four. On voit la surface de l'auto-creuset et l'on devine la grille métallique sous le verre dévitrifié. On constate que le verre dévitrifié a comblé une grande partie de l'espace entre la grille métallique et la tôle métallique.

La figure 6 représente la paroi d'un four selon l'invention, vue en coupe. Un profilé du type cornière (51,52) a été fixé sur une tôle métallique lisse verticale 50 formant la paroi du four. Cette cornière comprend deux plats 51 et 52 reliés entre eux de façon orthogonale. La cornière a été soudée sur la face intérieure de la tôle métallique lisse par son arête extérieure formant un angle obtus. La cornière a été fixée pour que sa direction d'extension soit horizontale. Les plats de la cornière sont des éléments en saillie formant localement dans la paroi des espaces 53, 54 pouvant se combler par de la matière vitrifiable dévitrifiée 55 de l'auto-creuset, cette matière vitrifiable dévitrifiée étant emprisonné dans ces espaces 53, 54 entre au moins les plats en saillie et de la surface de paroi 56, 57 situé plus vers l'extérieur du four que les plats 51, 52 en saillie. Ainsi, si l'on suit la droite 58 à partir de l'intérieur du four 59 en passant par le plat 51, on a bien ensuite de l'auto-creuset 53 emprisonné entre le plat 51 et la zone 56 de surface de tôle (originellement lisse) située plus loin en périphérie du four, en direction de l'extérieur du four 69.

La figure 7 représente en perspective un coin inférieur de l'intérieur d'un four à brûleurs immergés. Les brûleurs immergés 60 et 61 sont disposés en sole du four. Une ceinture 62 en un profilé métallique, fait tout le tour de la cuve du four. Cette ceinture est à une distance d (généralement de 5 à 20 cm) du point le plus profond de la sole. Cette ceinture forme une barrière pour les gaz passant sous l'auto-creuset entre la sole et la ceinture. Cette ceinture a en elle-même une hauteur h généralement comprise dans le domaine allant de 5 à 50 mm.

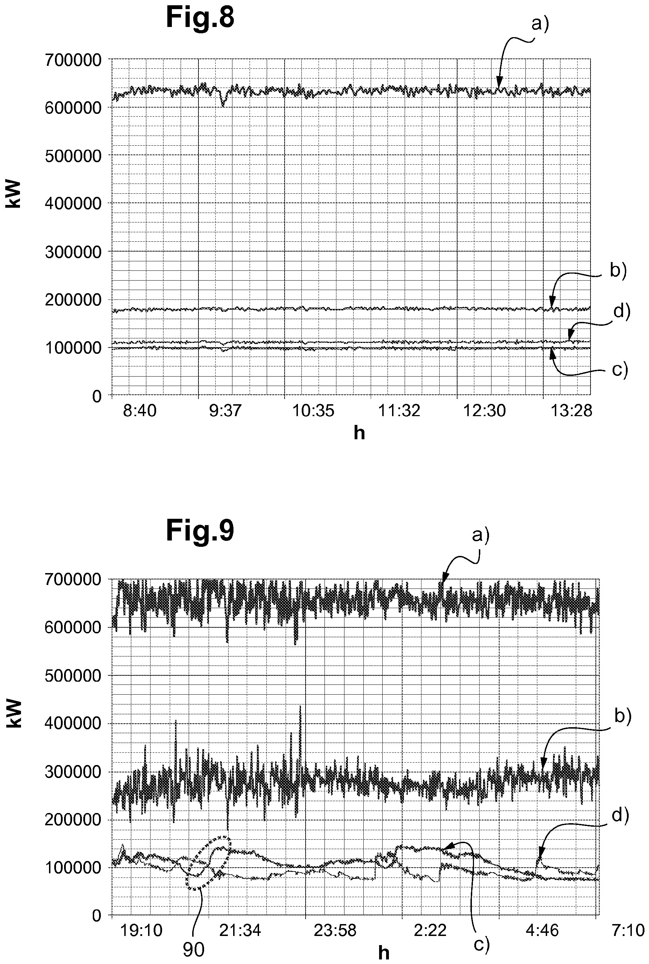

La figure 8 représente l'évolution des flux énergétiques avec le temps dans un four à bruleur immergé selon l'invention et dont la paroi intérieure est texturée comme montré sur la figure 2. A partir des mesures de température des différents circuits de fluide de refroidissement refroidissant différent endroits du four, on a relevé les flux de pertes énergétiques suivants :
- a) : flux total
- b) : voûte et cheminée
- c) : paroi de droite
- d) : paroi de gauche

Les flux sont bien réguliers et constants dans le temps.

La figure 9 représente l'évolution des flux énergétiques avec le temps dans un four à bruleur immergé identique à celui correspondant à la figure 3, sauf que la paroi intérieure était une tôle métallique lisse dépourvue de toute texture. On voit que les flux sont beaucoup plus irréguliers que dans le cas du four de la figure 8. Notamment, on distingue très bien lorsqu'une plaque d'auto-creuset se détache puisque la courbe de flux de la paroi affectée par ce détachement marque alors une montée brutale, comme notamment en 90.

## Revendications

1. Four de fusion d'une matière vitrifiable à brûleur immergé comprenant une paroi refroidie par un fluide de refroidissement (4, 22), la face (26) de la paroi tournée vers l'intérieur du four (59) comprend, avant fusion de la matière vitrifiable dans le four, une texture d'accroche pour de la matière vitrifiable dévitrifiée (53, 55) dit auto-creuset, **caractérisé en ce que** la paroi comprend une tôle métallique (1, 20, 50), la texture d'accroche étant réalisée par un système d'accroche comprenant des éléments métallique (2, 21) en saillie fixés sur la face de ladite tôle tournée vers l'intérieur du four (59).

2. Four selon la revendication précédente, **caractérisé en ce que** les éléments métallique (2, 21) comprennent du profilé métallique.

3. Four selon la revendication précédente, **caractérisé en ce que** le profilé métallique est fixé sur ladite tôle (1, 20, 50) de sorte que sa direction d'extension principale soit sensiblement horizontale.

4. Four selon l'une des deux revendications principale, **caractérisé en ce que** le profilé métallique est du type cornière (51, 52).

5. Four selon la revendication précédente, **caractérisé en ce que** la cornière (51, 52) est fixée à la tôle métallique (1, 20, 50) par son arête extérieure à la rencontre de ses deux plats (51, 52).

6. Four selon l'une des revendications précédentes, **caractérisé en ce que** la texture d'accroche comprend des pleins et des vides (6) d'au moins 5 mm en direction perpendiculaire à la paroi.

7. Four selon l'une des revendications précédentes, **caractérisé en ce que** la texture comprend des éléments en saillie (2, 21) formant localement dans la paroi des espaces (53, 54) pouvant se remplir par de la matière vitrifiable dévitrifiée de l'auto-creuset (53, 55), cette matière vitrifiable dévitrifiée étant emprisonnée dans ces espaces entre au moins une partie d'élément en saillie (2, 21) et de la surface de paroi (56, 57) situé plus en périphérie du four que la partie d'élément en saillie.

8. Four selon l'une des revendications précédentes, **caractérisé en ce que** la texture comprend une ceinture (62) sensiblement horizontale en saillie à une distance du point le plus bas de la sole, hors auto-creuset sur la sole, comprise entre 5 cm et 20 cm.

9. Four selon l'une des revendications précédentes, **caractérisé en ce qu'**un béton recouvre la paroi pour former une interface avec l'auto-creuset (53, 55).

10. Four selon la revendication précédente, **caractérisé en ce que** le béton contient plus de 50% et de préférence plus de 80% en poids d'alumine.

11. Four selon l'une des revendications précédentes **caractérisé en ce que** la paroi est verticale.

12. Procédé de fabrication d'une matière vitrifiable fondue, notamment de verre fondu, comprenant la fusion de la matière vitrifiable, notamment du verre, dans le four de l'une des revendications précédentes.

13. Procédé de fabrication du four de l'une des revendications de four précédentes comprenant la fixation d'éléments texturant sur la face lisse d'une tôle métallique, puis le positionnement de la tôle (1, 20, 50) de façon à ce que la face munie des éléments texturants forme la face intérieure d'une paroi du four.

## Patentansprüche

1. Ofen zum Schmelzen eines verglasbaren Materials mit einem Tauchbrenner, umfassend eine Wand, die durch ein Kühlfluid (4, 22) gekühlt wird, die Fläche (26) der Wand, die in Richtung des Inneren des Ofens (59) gedreht ist, vor dem Schmelzen des verglasbaren Materials in dem Ofen eine Befestigungsstruktur für entglastes verglasbares Material (53, 55), Selbsttiegel genannt, umfasst, **dadurch gekennzeichnet, dass** die Wand ein Metallblech (1, 20, 50) umfasst, die Befestigungsstruktur durch ein Befestigungssystem ausgeführt ist, umfassend vorstehende Metallelemente (2, 21) die auf der Fläche des Blechs fixiert sind, die in Richtung des Inneren des Ofens (59) gedreht ist.

2. Ofen nach dem vorstehenden Anspruch, **dadurch gekennzeichnet, dass** die Metallelemente (2, 21) das Metallprofil umfassen.

3. Ofen nach dem vorstehenden Anspruch, **dadurch gekennzeichnet, dass** das Metallprofil an dem Blech (1, 20, 50) so fixiert ist, dass seine Haupterstreckungsrichtung im Wesentlichen horizontal ist.

4. Ofen nach einem der zwei Hauptansprüche,
**dadurch gekennzeichnet, dass** das Metallprofil der Art Winkeleisen (51, 52) ist.

5. Ofen nach dem vorstehenden Anspruch, **dadurch gekennzeichnet, dass** das Winkeleisen (51, 52) an dem Metallblech (1, 20, 50) durch seine Außenkante bei dem Auftreffen seiner zwei Platten (51, 52) fixiert ist.

6. Ofen nach einem der vorstehenden Ansprüche,
**dadurch gekennzeichnet, dass** die Befestigungsstruktur volle und leere Stellen (6) von mindestens 5 mm in einer Richtung senkrecht zu der Wand umfasst.

7. Ofen nach einem der vorstehenden Ansprüche,
**dadurch gekennzeichnet, dass** die Struktur vorstehende Elemente (2, 21) umfasst, in der Wand lokal Räume (53, 54) ausbilden, die sich mit dem entglasten verglasbaren Material des Selbsttiegels (53, 55) füllen können, wobei dieses entglaste verglasbare Material in diesen Räumen zwischen mindestens einem Teil des vorstehenden Elements (2, 21) und der Oberfläche der Wand (56, 57) eingeschlossen ist, die sich weiter am Umfang des Ofens als der Teil des vorstehenden Elements befindet.

8. Ofen nach einem der vorstehenden Ansprüche,
**dadurch gekennzeichnet, dass** die Struktur einen im Wesentlichen horizontalen vorstehenden Gürtel (62) in einem Abstand von dem tiefsten Punkt des Herds umfasst, der zwischen 5 cm und 20 cm liegt.

9. Ofen nach einem der vorstehenden Ansprüche,
**dadurch gekennzeichnet, dass** ein Beton die Wand zum Ausbilden einer Schnittstelle mit dem Selbsttiegel (53, 55) bedeckt.

10. Ofen nach dem vorstehenden Anspruch, **dadurch gekennzeichnet, dass** der Beton zu mehr als 50 Gew.-% und vorzugsweise zu mehr als 80 Gew.-% Aluminium enthält.

11. Ofen nach einem der vorstehenden Ansprüche,
**dadurch gekennzeichnet, dass** die Wand vertikal ist.

12. Verfahren zum Herstellen eines flüssigen verglasbaren Materials, insbesondere aus flüssigem Glas, umfassend das Schmelzen des verglasbaren Materials, insbesondere des Glases, in dem Ofen nach einem der vorstehenden Ansprüche.

13. Verfahren zum Herstellen des Ofens nach einem der vorstehenden Ansprüche des Ofens, umfassend das Fixieren von strukturierenden Elementen auf der glatten Fläche eines Metallblechs, dann das Positionieren des Blechs (1, 20, 50) so, dass die Fläche, die mit strukturierenden Elementen versehen ist, die Innenseite einer Wand des Ofens ausbildet.

## Claims

1. A submerged burner vitrifiable material melting furnace including a wall cooled by a cooling fluid (4, 22), the face (26) of the wall facing toward the interior of the furnace (59) has, before melting vitrifiable material (53, 55) in the furnace, an attachment texture for so-called self-crucible devitrified vitrifiable material, **characterized in that** the wall includes a metal plate (1, 20, 50), the attachment texture being produced by an attachment system comprising projecting metal elements (2, 21) fixed to the face of said plate facing toward the interior of the furnace (59).

2. The furnace as claimed in the preceding claim, **characterized in that** the metal elements (2, 21) comprise a metal profile.

3. The furnace as claimed in the preceding claim, **characterized in that** the metal profile is fixed to said plate (1, 20, 50) so that the main direction in which it extends is substantially horizontal.

4. The furnace as claimed in either of the two main claims, **characterized in that** the metal profile is of the angle iron type (51, 52).

5. The furnace as claimed in the preceding claim, **characterized in that** the angle iron (51, 52) is fixed to the metal plate (1, 20, 50) by its exterior edge at the junction of its two flat wings (51, 52).

6. The furnace as claimed in one of the preceding claims, **characterized in that** the attachment texture comprises solids and voids (6) of at least 5 mm in a direction perpendicular to the wall.

7. The furnace as claimed in one of the preceding claims, **characterized in that** the texture comprises projecting elements (2, 21) forming locally in the wall spaces (53, 54) adapted to be filled by devitrified vitrifiable material of the self-crucible (53, 55), that devitrified vitrifiable material being trapped in these spaces between at least part of a projecting element (21, 21) and the surface of the wall (56, 57) situated farther toward the periphery of the furnace than the projecting element part.

8. The furnace as claimed in one of the preceding claims, **characterized in that** the texture comprises a substantially horizontal belt (62) projecting to a distance between 5 cm and 20 cm inclusive from the lowest point of the hearth, outside the self-crucible on the hearth.

9. The furnace as claimed in one of the preceding claims, **characterized in that** concrete covers the wall to form an interface with the self-crucible (53, 55).

10. The furnace as claimed in the preceding claim, **characterized in that** the concrete contains more than 50% by weight and preferably more than 80% by weight of alumina.

11. The furnace as claimed in one of the preceding claims, **characterized in that** the wall is vertical.

12. A method of producing a molten vitrifiable material, in particular molten glass, comprising melting the vitrifiable material, in particular the glass, in the furnace as claimed in one of the preceding claims.

13. A method of producing the furnace as claimed in one of the preceding furnace claims comprising fixing texturizing elements onto the smooth face of a metal plate (1, 20, 50) and then positioning the plate so that the face provided with the texturizing elements forms the interior face of a wall of the furnace.
